# EUROPEAN PATENT APPLICATION

(11) **EP 4 518 041 A1**
(43) Date of publication of application: **05.03.2025**
(21) Application number: 24197277.7
(22) Date of filing: 29.08.2024
(51) Int. Cl.: H01R 13/52, H01R 43/00, H01R 13/516

(54) **GROMMET THROUGH WHICH AN ELECTRICAL CONNECTOR CAN BE PASSED**

(30) Priority: 31.08.2023 DE 102023123538
(71) Applicant: TE Connectivity Solutions GmbH, 8200 Schaffhausen (CH); WOCO Industrietechnik GmbH, 63628 Bad Soden-Salmünster (DE)
(72) Inventor: LEONHARD, Andreas, 8200 Schaffhausen (CH); GLASER, Stefan Ernst, 8200 Schaffhausen (CH); SCHNEIDER, Joachim, 8200 Schaffhausen (CH); MEININGER, Dennis, 8200 Schaffhausen (CH); DIETZ, Matthias, 63628 Bad Soden-Salmünster (DE); HÜFNER, Oliver, 63628 Bad Soden-Salmünster (DE)
(74) Representative: Grünecker Patent- und Rechtsanwälte PartG mbB

(57) **Abstract**

The invention relates to a grommet (1) for an electrical connector, an electrical connector assembly (3), and a method for manufacturing such a connector assembly. The grommet comprises an elastically expandable tube section (4) and a cap-shaped housing section (6). The tube section comprises a cable receptacle (10) for passing through an electrical cable (12) connected to the electrical connector. The housing section comprises a connector receptacle (14) connected to the cable receptacle for receiving the electrical connector. The grommet forms a seal (18) which surrounds an opening (16) of the housing section facing away from the tube section. The invention is based on the object of configuring the grommet (1) such that the manufacture of the connector assembly, in which the electrical connector is disposed at least in sections in the connector receptacle and the electrical cable is disposed at least in sections in the cable receptacle, can be largely automated. This object is satisfied, firstly, in that the tube section in a mounting position (20) is elastically expanded such that its inner diameter (22) is at least twice the inner diameter (24) in a force-free state (7). At least in the mounting position (20), the electrical connector should be insertable through the tube section into the housing section. This solution makes it possible to pre-assemble the electrical connector completely and in a fully automated manner and to insert it into the grommet in the pre-assembled state.

## Description

The invention relates to a grommet for an electrical connector with an elastically expandable tube section and with a cap-shaped housing section, where the tube section comprises a cable receptacle for passing through an electrical cable that is connected to the electrical connector, where the housing section comprises a connector receptacle that is connected to the cable receptacle for receiving the electrical connector and forms a seal which surrounds an opening of the housing section facing away from the tube section.

The invention furthermore relates to a connector assembly which comprises a grommet with a tube section and a cap-shaped housing section, an electrical connector which is covered at least in sections by the housing section of the grommet on its side facing away from the contact field, where a seal of the housing section abuts in a sealing manner against the connector and comprises a cable that is connected to the electrical connector and that extends through the tube section and is surrounded in a sealing manner by the tube section.

Finally, the invention also relates to a method for manufacturing a pre-assembled connector assembly. The grommet is in particular suitable for door connectors in the automotive sector where, firstly, attention must be paid to a good seal and, secondly, to a high number of deformations due to the many opening and closing operations of the door during operation and to a low overall installation height. The pre-assembled connector assembly is in particular a door connector of an automobile which forms, for example, the part of an electrical plug connection on the door side. With such an arrangement, the mating connector can be arranged at the inner side of the automobile body, for example, at the door pillar. The tube section of the grommet protects the electrical cable when the door is opened and closed and prevents moisture and dirt from ingressing into the electrical connector.

Such electrical assemblies are currently predominantly pre-assembled by hand in the automobile construction, which is complex and expensive. The invention is therefore based on the object of providing a grommet, an electrical connector assembly, and a method for manufacturing an electrical connector assembly to simplify automation, which make it possible to automate the manufacture of the connector assembly to a greater extent.

This object is satisfied for the grommet mentioned at the outset in that the tube section is configured such that it can transition to a mounting position, where the tube section is elastically expanded in the mounting position and has an inner diameter which is at least twice the inner diameter when the tube section is in a force-free state.

For the pre-assembled connector assembly, the above object is satisfied in that the tube section can transition to a mounting position in which the tube section is elastically expanded and in which the electrical connector can be inserted through the tube section into the housing section.

The elastic expandability of the tube section allows the pre-assembled electrical connector to be inserted through the grommet. The electrical connector can therefore be pre-assembled in a fully automated manner using an automatic assembly machine, which increases the degree of automation in the manufacture of the connector assembly and reduces costs.

Accordingly, the above-mentioned object is also satisfied by a method for manufacturing a connector assembly, the method comprising the following steps of: pre-assembling an electrical connector and connecting a cable to the electrical connector; inserting the electrical connector together with the cable through a tube section of an elastically expanded grommet; and slipping a housing section of the grommet over the electrical connector.

The above solution can be further improved by the following features, which are independent of one another, can be combined with one another as desired, and are each advantageous by themselves.

For example, the grommet is preferably manufactured monolithically from one piece; it forms a substance-fit body. The body of the grommet can have different materials and/or regions of a material with different material properties.

The tube section is preferably reversibly expandable or deformable, respectively. This means that, after the tube section has transitioned from the force-free state to the mounting position for the first time or several times, the inner diameter in the force-free state remains at least almost unchanged or constant, respectively. A change of ± 10% of the inner diameter in the force-free state is still to be regarded to be constant or unchanged, respectively. This ensures that, after the tube section has been expanded, it can surround the electrical cable in a sealing manner.

The connector receptacle preferably has a polygonal, in particular square or rectangular base area. A longitudinal direction of the base area can be in the longitudinal direction of the longitudinal extension of the tube section.

The housing section can comprise side walls, including a front wall and/or a rear wall. The side walls can be disposed opposite each other in the direction transverse to the longitudinal extension of the tube section, whereas the rear wall can form the end of the connector receptacle facing the tube section and the front wall can form the end of the housing section facing away from the tube section. Each of the side walls can also be formed by only the seal.

According to a further advantageous configuration, the housing section can comprise a reinforced region which extends around the opening at least in sections, preferably continuously, and which is preferably arranged between the seal and the remaining housing section. The reinforced region increases the dimensional stability of the housing section and allows for a force acting upon the housing section to be passed on evenly to the seal, which facilitates the sealing function by the seal.

The reinforced region can form in particular a frame which preferably extends closed around the opening of the housing section.

The reinforced region can be flange-shaped or form a flange section which projects outwardly away from the opening of the housing section. The flange section can extend around a section of the opening or closed around the opening.

The reinforced region is in particular a monolithic part of the grommet, but can nevertheless be made of a different material, for example, due to manufacture by way of a multi-component method, or of the same material but that is processed or treated differently than the remainder of the grommet. For example, the tube section and the non-reinforced region of the housing section can be manufactured from a rubber-elastic material and/or a soft elastomer. Such a soft elastomer can be, for example, a polyester, in particular TPE. The Shore hardness of the tube section and the non-reinforced region of the housing section can be between 40 and 50 Shore, and that of the reinforced region around 70 Shore. The reinforced region of the housing section can alternatively or cumulatively be manufactured from a hard elastomer such as TPE or a fiber-reinforced plastic material such as PBT.

In one configuration, the seal can be disposed on an inner side of the reinforced region facing into the opening of the housing section, for example, to seal inwardly in the radial direction. Alternatively or cumulatively, the seal can be disposed on a side of the flange section facing away from the opening if a radial seal toward the outside is desired. If a seal is desired in the axial direction or in the plugging direction, respectively, in which the connector is plugged together with a mating connector, then the seal can alternatively or cumulatively project in the plugging direction.

The seal can be manufactured from a soft elastomer. For example, it can be manufactured from the same material as the tube section and/or the non-reinforced region of the housing section. The seal can be manufactured, in particular, from a polyester such as TPE with a Shore hardness of 40-50 Shore.

The seal can be formed directly from the material of the non-reinforced region of the housing section. If the seal is disposed on a section of the housing section facing the opening of the housing section, then the seal is preferably arranged between the opening and the reinforced region. In such a configuration, the reinforced region supports the seal from the outside. Alternatively or cumulatively, the reinforced region can also lie between the seal and the opening in order to support the seal radially on the inside if a sealing effect is desired radially toward the outside. Finally, the seal can form the edge surface of the opening facing in the plugging direction. In this way, the seal can be supported in the plugging direction.

The configuration off the seal from a different material than the reinforced region is particularly useful if the reinforced region is formed from a non-rubber-elastic, hard, not very flexible and/or elastic material such as a plastic material, for example, a polyester such as PBT.

The seal can also be formed by the reinforced region or by the material of the reinforced region itself if, for example, the reinforced region is formed from a harder soft elastomer or a hard elastomer that has a Shore hardness of around 70 Shore. In this case, the reinforced region extends up to the sealing surface, i.e. in the case of a seal acting radially inwardly, up to the edge surface of the opening of the housing section, in the case of a seal acting radially outwardly, up to the (outer) side of the housing section facing away from the opening, and in the case of a seal acting axially, up to the end of the housing section located in the plugging direction and surrounding the opening.

In order to avoid damage to the seal when the grommet is deformed, it can be advantageous to have the seal be connected to the remaining housing section only at the reinforced region.

The sealing effect can be further enhanced if the seal comprises at least one sealing lip which runs preferably continuously around the opening. If the seal is configured as a radial seal, then the at least one sealing lip can project perpendicular to the plugging direction. For example, the sealing lip can project inwardly towards the connector receptacle. A radial seal is also possible if the sealing lip projects outwardly in a direction away from the opening. If the seal is configured as an axial seal, then the sealing lip can project in the opening direction. With a combined axial and radial seal, both types of sealing lips can be provided at the same time.

The opening direction corresponds to a normal direction of a plane spanned by the opening of the connector receptacle. In one configuration, the opening of the housing section opens in a direction which, when the grommet is in a force-free state, is disposed at an angle between approximately 60° and approximately 120° to the longitudinal direction of the tube section. If the electrical connector is in particular an angle connector, then the opening direction of the housing section can be at least approximately 90°. In the case of a straight connector, the opening direction can run parallel to the longitudinal direction of the tube section. In one configuration of the grommet, the opening direction of the opening can correspond to a plugging direction in which the electrical connector is plugged together with a mating connector.

In order to push the electrical connector through the grommet more easily, it can be advantageous to have the housing section in the mounting position be reversibly pivotable and/or deformable compared to the force-free state of the grommet in such a way that the opening of the housing section points in the longitudinal direction of the tube section. In particular, in the mounting position, the tube section can be freely accessible along the longitudinal direction so that the tube section, in particular the cable receptacle, is not overlapped in the longitudinal direction in part or closed in part by the housing section. In the mounting position, the housing section can be, for example, folded down by at least approximately 60°, in particular by approximately 90°.

In a further configuration, inserting the electrical connector through the tube section can be facilitated in that the tube section in the mounting position is elastically and in particular reversibly compressible to a length which is at most as long as the inner diameter of the tube section in the mounting position. In particular, the length of the tube section in its longitudinal direction in the mounting position can be shorter than the length of the electrical connector in the direction in which it is inserted through the tube section. In the force-free state, however, the tube section can have a length that is at least six times, but preferably at least eight times, the length of the tube section in the mounting state. Such a length prevents liquids or dirt from reaching the interior of the housing section between the tube and the electrical cable.

If the electrical connector together with the electrical cable is received in the grommet, then the tube section is preferably elastically expanded by the electrical cable so that the tube section abuts tightly against the electrical cable.

In a further advantageous configuration, the tube section can be provided at least in sections with ribs running around in the circumferential direction. The ribs can each project outwardly. Alternatively or additionally, the ribs can project inwardly so that ribs can be present on the outer surface of the tube section and/or on the inner surface of the tube section.

The ribs can lie immediately adjacent to one another in one or more regions of the tube section. Outside the at least one region, the tube section can be smooth on its inner side and/or outer side. The ribs increase the flexibility of the tube section so that it can better follow the motions of the electrical cable. This is particularly advantageous if the grommet is used in a door connector of a motor vehicle and the tube section must follow the door motions. Due to the ribs, it is additionally easier to elastically and reversibly compress the tube section in its longitudinal direction when it is in the mounting position.

The ribs can extend perpendicular to the longitudinal direction. Each of the ribs lies preferably in a plane that runs perpendicular to the longitudinal direction. In this configuration, the at least one region with the ribs resembles the structure of a vacuum tube.

The side walls or the rear and front walls of the housing section can be connected to one another by a cover wall. The cover wall protects the electrical connector that is received in the connector receptacle.

The cover wall can be reinforced, for example, i.e. have a higher rigidity than the tube section. A reinforced cover wall makes the housing section more dimensionally stable and can lead to better protection of the electrical connector received in the housing section. The side walls between the cover wall and the reinforced region can be less rigid than the cover wall and the reinforced region or can also themselves be reinforced.

The rear wall of the housing section facing the tube section can extend further from the cover wall in the opening direction or plugging direction, respectively, than the front wall, which is disposed at the side of the housing section facing away from the tube section. Such a configuration can simplify slipping the housing section over the electrical connector by allowing a pivoting motion.

The housing cover can be configured to be complementary to a rear side of the electrical connector. If the electrical connector is received in the housing section, then the rear side of the electrical connector can abut against the housing wall in one configuration. A complementary configuration of the housing cover and the rear side of the electrical connector means that the housing cover and the rear side nestle together without any empty space, which reduces the installation height of the connector assembly.

The electrical connector does not have to be received entirely in the connector receptacle, but can project from the housing section, through the opening, in the opening direction and/or plugging direction.

In an advantageous configuration, the connector assembly can comprise a mating connector which is configured to be complementary to the electrical connector, i.e. to be pluggable together with the electrical connector. In a state when the connector and the mating connector are plugged together, the seal of the housing section preferably abuts in a sealing manner against the mating connector. Consequently, the housing section seals the gap created between the electrical connector and the mating connector plugged together therewith, regardless of whether the mating connector is plugged into the electrical connector or the electrical connector is plugged into the mating connector. The seal encloses the mating connector, where the seal can be elastically expanded by the mating connector so that its elastic expansion causes the seal to press against the mating connector, which increases the sealing effect.

The mating connector can comprise a sealing seat with a shoulder pointing perpendicular to the plugging direction. When the connector and the mating connector are fully assembled, the seal can be pressed against the shoulder, which also leads to the gap between the connector and the mating connector to be sealed. The shoulder runs preferably continuously around the mating connector, particularly on its outer side or inner side. Alternatively, the seal seat can also be formed by a groove running around the mating connector and in which the seal rests when the connector and the mating connector are plugged together and the grommet is fully mounted onto both.

In one configuration, the mating connector is a wall connector that is configured to be mountable on a wall, for example, a wall of a vehicle body. In particular, the connector assembly is a connector assembly for a door of a vehicle, where the mating connector is attached, for example, to a pillar of the vehicle body.

The connector assembly can comprise a housing cover which is attached to the mating connector when the connector and the mating connector are in a state plugged together, where the housing section is disposed at least in sections between the housing cover and the electrical connector. The housing cover provides additional protection for the housing section and the electrical connector received therein. In particular, the housing cover mounted to the mating connector can generate a preload force acting upon the housing section and pressing the housing section, in particular its seal, against the mating connector.

The connector assembly can comprise a locking lever which is attached in particular to the mating connector. The locking lever can be pivoted, for example, to a closed position, where the housing section in the closed position is arranged at least in sections between the locking lever and the electrical connector. In the closed position, the locking lever can generate a preload force which presses the housing section, in particular its seal, against the mating connector as an alternative or in addition to the housing cover. If a housing cover is present, then it is preferably located in the closed position between the housing section and the locking lever.

The locking lever can be part of a mechanical drive system and, when pivoting to the closed position, draw the electrical connector and the mating connector to each other until they are completely plugged together.

The mating connector can comprise a depression in which at least a section of the seal can be received and in which the seal lies when the connector is received in the housing section and is plugged together with the mating connector. Such a depression can be used, for example, to facilitate slipping the housing section over the connector and the mating connector. The depression can form a pivot axis about which the housing section can be pivoted. The depression is preferably disposed on the rear wall of the housing section.

If a mechanical drive system is provided at the mating connector, the parts of which project from the mating connector, then these parts are preferably located beyond the housing section. The section of the mating connector from which the parts of the mechanical drive system project is therefore not covered by the housing section.

In order to be able to attach the grommet securely, it is provided in one configuration with latching devices, for example, at least one latching projection and/or at least one latching recess or opening. The latching devices are preferably formed by the reinforced region. In the connector assembly, the latching devices of the grommet are latched to complementary latching devices of the mating connector according to one configuration.

The invention shall be described hereafter using an embodiment with reference to the accompanying drawings. In accordance with the above embodiments, a feature of the following embodiment can be omitted if the technical effect associated with this feature is not important for a specific application. Conversely, a features describe above can also be added to the embodiment should the technical effect of these features be advantageous for a specific application,

For the sake of simplicity, the same reference characters are used hereafter for elements that correspond to one another in terms of function and/or structure, where:
- Fig. 1: shows a schematic perspective view of an embodiment of a grommet;
- Fig. 2: shows a schematic perspective view of the grommet of Fig. 1 and a pre-assembled connector assembly prior to its assembly;
- Fig. 3: shows a schematic perspective representation of a state during the manufacture of an electrical connector assembly;
- Fig. 4: shows a schematic perspective view of a further state in the manufacture of the connector assembly;
- Fig. 5: shows a schematic perspective view of a further state in the manufacture of the connector assembly;
- Fig. 6: shows a schematic perspective representation of a state in the manufacture of an electrical connector assembly;
- Fig. 7: shows a schematic perspective representation of a further state in the manufacture of an electrical connector assembly;
- Fig. 8: shows a schematic sectional view of the completed electrical connector assembly of Fig. 7 with a detail A;
- Fig. 9: shows a schematic perspective view of a further grommet;
- Fig. 10: shows a schematic perspective representation of a state in the manufacture of an electrical connector assembly using the grommet of Fig. 9; and
- Fig. 11: shows a schematic sectional view of the completed electrical connector assembly of Fig. 10 with a detail B.

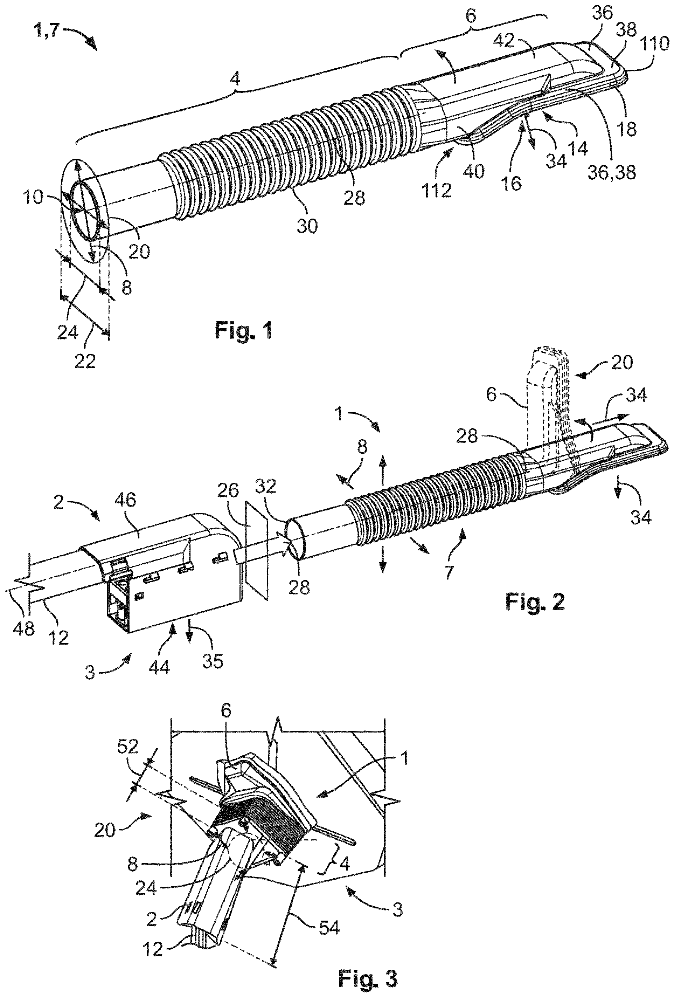

Fig. 1 shows a grommet 1 for an electrical connector 2. Electrical connector 2 with grommet 1 is shown in Fig. 2. Together, electrical connector 2 and grommet 1 form a connector assembly 3.

Grommet 1 comprises an elastically expandable tube section 4 which transitions preferably directly into a housing section 6. The elastic expandability of the tube section is indicated by arrows 8 in Fig. 2.

Tube section 4 comprises a cable receptacle 10 for an electrical cable 12. The term electrical cable also includes a bundle of individual conductors.

Housing section 6 comprises a connector receptacle 14 connected to the cable receptacle. Connector receptacle 14 serves to receive electrical connector 2 at least in sections. If electrical connector 2 is disposed in housing section 6, then it preferably projects from an opening 16 of the housing section facing away from tube section 4. Cable receptacle 10 opens into connector receptacle 14.

Housing section 6 also comprises a seal 18 which surrounds opening 16 in an in particular continuous or closed manner.

Grommet 1 with tube section 4 and housing section 6 is preferably a monolithic body, in particular made of rubber-elastic material.

In a force-free state 7, tube section 4 has substantially the shape illustrated in Fig. 1. From this force-free state 7, the tube section can transition to a mounting position 20 in which the inner diameter of tube section 4 is reversibly expanded compared to force-free state 7 of tube section 4. Mounting position 20 is only indicated in Fig. 1.

An inner diameter 22 of tube section 4 in mounting position 20 can be at least twice, more preferably at least 3 times, inner diameter 24 in force-free state 7. In particular, tube section 24 can be reversibly expanded by approximately 2 to 4 times inner diameter 24. Cumulatively or alternatively, inner diameter 24 of tube section 4 can be expanded, in particular reversibly, such that the cubature of electrical connector 2 with smallest base area 26 can be moved in longitudinal direction 28 of the tube section through tube section 4 into housing section 6. Reversible expandability is there understood to mean that inner diameter 24 in force-free state 7 after the first or repeated assumption of mounting position 20 corresponds at least approximately to inner diameter 24 before the first assumption of mounting position 20.

Tube section 4 can comprise one or more sections, each with one or more radially outwardly projecting ribs 30 running around in the circumferential direction. In particular, ribs 30 can run parallel to one another and/or each lie in a plane that runs perpendicular to longitudinal direction 28 of tube section 24.

Ribs 30 are configured to enable tube section 4 to be pushed together elastically in its longitudinal direction 28. By pushing it together, end 32 of tube section 4 facing away from housing section 6 can be moved closer to the end disposed at housing section 6. This shortens the distance that electrical connector 2 needs to be moved through tube section 4. Ribs 30 project in parallel alternately outwardly and inwardly similar to a vacuum tube.

Tube section 4 can be provided with ribs 30 along its entire length or, alternatively, only in sections, for example, in a central region, which can be defined at both ends by smooth-walled regions of tube section 4.

The inner cross section and/or the outer cross section of the tube section perpendicular to its longitudinal direction 28 is preferably circular, even in the region of ribs 30, if they are present.

Connector receptacle 14 opens in an opening direction 34. Opening direction 34 is, for example, the normal direction to a plane spanned by opening 16. In force-free state 7 of grommet 1, the opening direction runs at an angle between approximately 60° and 120°, preferably approximately perpendicular to longitudinal direction 28 of the tube section. In some configurations, opening direction 34 can also run parallel to longitudinal direction 28 of the tube section, depending on whether electrical connector 2 is an angled connector or a straight connector. Opening direction 34 preferably runs parallel to a plugging direction 35 in which electrical connector 2 is plugged together with a mating connector (not shown in Figs. 1 and 2).

The base area of housing section 6 perpendicular to opening direction 34 of opening 16 is substantially rectangular and can have rounded corners. Housing section 6 or its base area can be longer in longitudinal direction 28 of tube section 4 than in the direction transverse to the longitudinal direction.

Housing section 6 in mounting position 20 can be, for example, elastically folded away or pivoted or deformed relative to tube section 8. When the housing section is folded away, opening direction 34 points approximately in longitudinal direction 28. In the state folded away, housing section 6 is moved in particular from the overlap in longitudinal direction 28 with tube section 4 so that the interior of tube section 4 is freely accessible in longitudinal direction 28. Folding away housing section 20 makes it easier to insert electrical connector 2 through grommet 1. The pivoted position of housing section 6 is indicated by dashed lines in Fig. 2.

Housing section 6 comprises a reinforced region 36. Reinforced region 36 has an increased rigidity or Shore hardness compared to its immediate surroundings. Reinforced region 36 can be less easily deformed elastically than remaining housing section 6. It can be manufactured from the same or a different material than remaining housing section 6, in particular seal 18, and/or tube section 4, but is preferably a monolithic part of grommet 1. In one variant, entire housing section 6, except for seal 18, can also be reinforced relative to seal 18 and/or tube section 4.

For example, reinforced region 36 is made of a TPE with a Shore hardness of approximately 70 Shore and the remaining part of grommet 1 is made of a TPE with a Shore hardness of approximately 40 Shore to approximately 50 Shore. Reinforced region 36 is preferably manufactured with remaining grommet 1 in one manufacturing step, for example, in a two- or multi-component process. In the configuration of Fig. 1, reinforced region 36 simultaneously forms seal 18. This is possible for the reason that the reinforced region, despite its hardness, is sufficiently flexible and elastic to develop a sealing effect.

Reinforced region 36 gives seal 18 as well as the remainder of housing section 6 dimensional stability. Reinforced region 36 can be formed, for example, by a flange section 38 which surrounds opening 16 in a closed manner or in sections. Seal 18 and/or flange section 38 can project slightly in the direction away from opening 16, for example, in normal direction 34. Regardless of this, seal 18 is configured as a radial seal, it therefore projects towards opening 16. Seal 18 and/or reinforced region 36 can form the edge of connector receptacle 14 that points in plugging direction 35 and encloses opening 16.

In particular if opening direction 34 runs at least approximately perpendicular to longitudinal direction 28, tube section 4 can project slightly beyond housing section 6 on the side facing away from opening 16 so that as little installation height as possible is required.

The housing section can comprise at least two side walls 40 which are disposed opposite one another with respect to longitudinal direction 28. Two side walls 40 are preferably connected to one another by a cover wall 42. Cover wall 42 is configured to cover electrical connector 2 on a rear side disposed opposite to a contact field 44. It is disposed opposite opening 16, where tube section 4 opens into the region between opening 16 and cover wall 42, i.e. connector receptacle 14 As shown, in force-free state 7 of grommet 1, cover wall 42 can run parallel to longitudinal direction 28 of tube section 4 and slightly offset transverse thereto.

The inner contour of housing section 6 is preferably formed at least in sections to be complementary to rear side 46 of the electrical connector 2 so that housing section 6 and rear side 46 of electrical connector 2 nestle against one another and there is consequently no unnecessary empty volume between rear side 46 of electrical connector 2 and cover wall 42.

As shown in Fig. 2, electrical connector 2 can be in particular an angle connector in which a direction 48 in which cable 12 extends from electrical connector 2, or longitudinal direction 28 runs perpendicular to a plugging direction 35, respectively. Plugging direction 35 is, for example, the direction towards which contact field 44 opens.

Seal 18 is preferably configured such that it is slightly spaced from electrical connector 2 and/or abuts only loosely against electrical connector 2. As shall be explained further below, seal 18 in one configuration should abut in a sealing manner, in particular radially sealing manner, against the mating connector that is complementary to electrical connector 2 when electrical connector 2 and the mating connector are plugged together.

The steps with which a pre-assembled connector assembly 3 can be produced shall be briefly discussed hereafter with reference to Figs. 3 to 7. As already shown in Fig. 2, electrical connector 2 is already pre-assembled. This pre-assembly is preferably carried out in a fully automated manner by an automatic assembly machine. At the end of the fully automated pre-assembly of electrical connector 2, electrical connector 2 is completed as a mounting part with all housing parts, contacts, and electrical cable 12.

The pre-assembled electrical connector is now pushed through grommet 1 from tube section 4 towards housing section 6.

For this purpose, as shown in Fig. 3, grommet 1 is expanded elastically to such an extent that electrical connector 2 with electrical cable 12 can be inserted through tube section 4 into housing section 6 or beyond housing section 6 into or through the grommet.

In order to make the insertion easier, tube section 4 in mounting position 20 can be compressed in longitudinal direction 28. In one configuration, tube section 4 can be compressed, for example, to a length 52 which, in the direction in which electrical connector 2 is inserted through tube section 28, is shorter than length 54 of the connector there in direction 48 of the cable outlet or transverse to plugging direction 35, respectively. However, in other configurations, length 52 of compressed tube section 4 can also be longer than length 54 of connector 2 or the tube section can not be compressed at all, but only expanded. In the compressed position of tube section 2, for example, ribs 30 rest directly on top of one another. The compression in the longitudinal direction can occur, for example, in part due to the elastic expansion.

Housing section 6 in mounting position 20 is folded over, as explained above. It can also be expanded. By folding over housing section 6, electrical connector 2 can be inserted freely through tube section 4 without colliding with housing section 6.

If connector 2 is inserted through grommet 1, this results in the state shown, for example, in Fig. 3, in which connector 2 is pushed through grommet 1 beyond an end 56 of housing section 6 facing away from tube section 2 and is thus completely exposed In this example, grommet 1 only covers electrical cable 12. Alternatively, electrical connector 2 can also already be disposed at least in sections in housing section 6 at the end of the insertion process shown in Fig. 3.

Regardless of the exact relative position of electrical connector 2 and grommet 1 after connector 2 has been inserted through grommet 1, connector 2 is now ready to be plugged together with a mating connector 60 in plugging direction 35. Mating connector 60 is an optional component of connector assembly 3.

Mating connector 60 can be provided with a mechanical drive system 62, for example, a pusher 64 and/or a lever 66. Drive system 62 can be configured to engage in mating elements 68 of electrical connector 2 and, when actuated, to drawn electrical connector 2 and mating connector 60 towards each other until they are completely plugged.

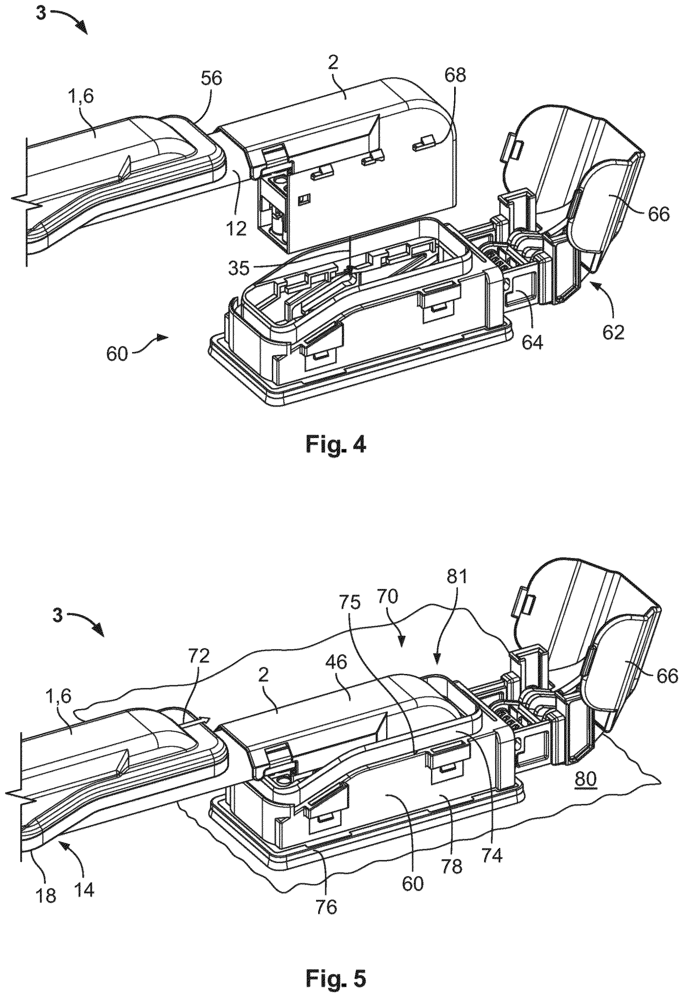

In Fig. 5, electrical connector 2 and mating connector 60 are shown in fully plugged state 70. However, grommet 1 is not yet in its final position in which electrical connector 2 is received in housing section 5. When fully plugged, electrical connector 2 can be plugged into mating connector 60 or mating connector 60 can be plugged into electrical connector 2.

As soon as fully plugged state 70 has been reached, grommet 1 is pushed along electrical cable 12 towards electrical connector 2 and thereafter housing section 2 is slipped over connector 2, as indicated by arrow 72 in Fig. 5.

Mating connector 60 can comprise a sealing seat 74 that is configured to be complementary to seal 18 or its contour, respectively, and that can be configured, for example, as a circumferential depression or as a recess with a shoulder 75.

Sealing seat 74 is configured such that seal 18 of housing section 6 comes to rest therein when grommet 1 is completely drawn over the electrical connector. Seal 18 can abut against the outside of mating connector 60, in particular against seal seat 74, with a sealing force directed inwardly in the radial direction. In addition, seal 18 can also be pressed against shoulder 75 with a sealing force in plugging direction 35.

Mating connector 60 can comprise a wall seal 76, in particular if mating connector 60 is configured for wall mounting. Wall seal 76 is disposed between a housing 78 of mating connector 60 which receives electrical connector 2 and a wall 80, for example, a section of a vehicle body, at which mating connector 60 is mounted.

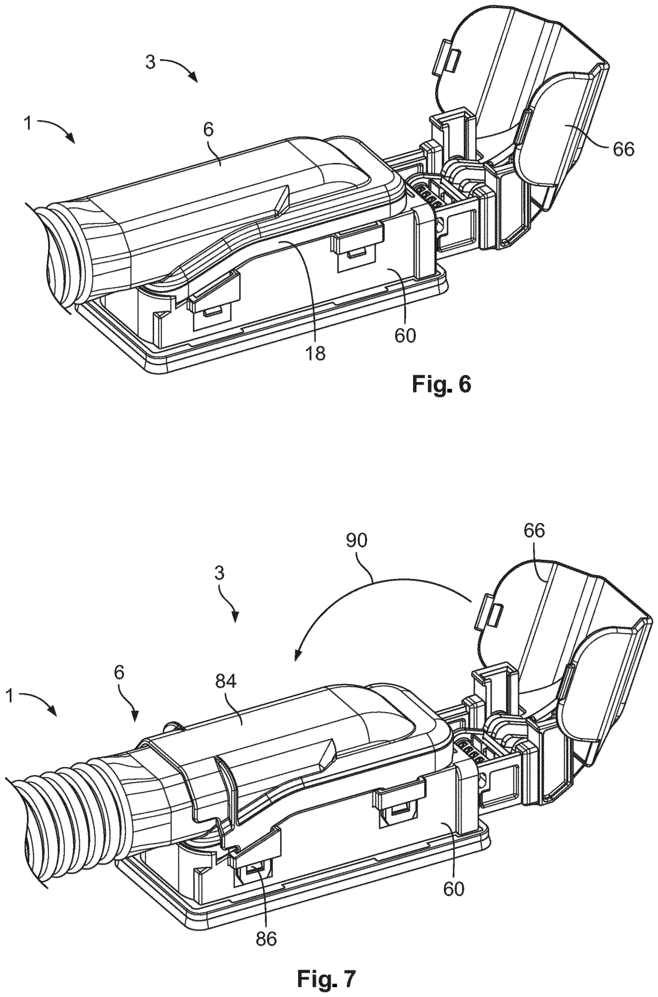

Fig. 6 shows fully mounted grommet 1. Housing section 6 closes in a sealing manner side 81 (Fig. 5) of mating connector 60 which is open towards electrical connector 2 so that no dirt or moisture can ingress between electrical connector 2 and mating connector 60. Rear side 46 (Fig. 5) of electrical connector 2 is received in connector receptacle 14. Mechanical drive system 62 is disposed outside housing section 6, which considerably simplifies sealing. Open side 81 is there disposed opposite cover wall 42. Seal 18 abuts against mating connector 60, in particular against its sealing seat 74 surrounding it.

The following steps are optional. As shown in Fig. 7, a housing cover 84 can be placed onto housing section 6 of grommet 1 and be attached, in particular latched, to mating connector 60, for example, by way of mutually complementary latching devices 86 that bare present at housing cover 84 and at mating connector 60.

Regardless of the type of attachment to mating connector 60, housing cover 84 is configured to exert a force that presses housing section 6 against electrical connector 2 and/or mating connector 60 in order to enhance or ensure the sealing effect of seal 18. Alternatively or additionally, housing cover 84 protects grommet 1 from damage and additionally secures it to mating connector 60.

Alternatively or in addition to housing cover 84, lever 66 can also serve as a housing at least in sections and for this purpose be folded onto housing section 6 of grommet 1, as indicated by arrow 90 in Fig. 7. Lever 66 can perform the same function as housing cover 84 if housing cover 84 is absent.

If a housing cover 84 is present, then lever 66 can be folded onto housing cover 84 so that the housing cover is additionally secured and protected.

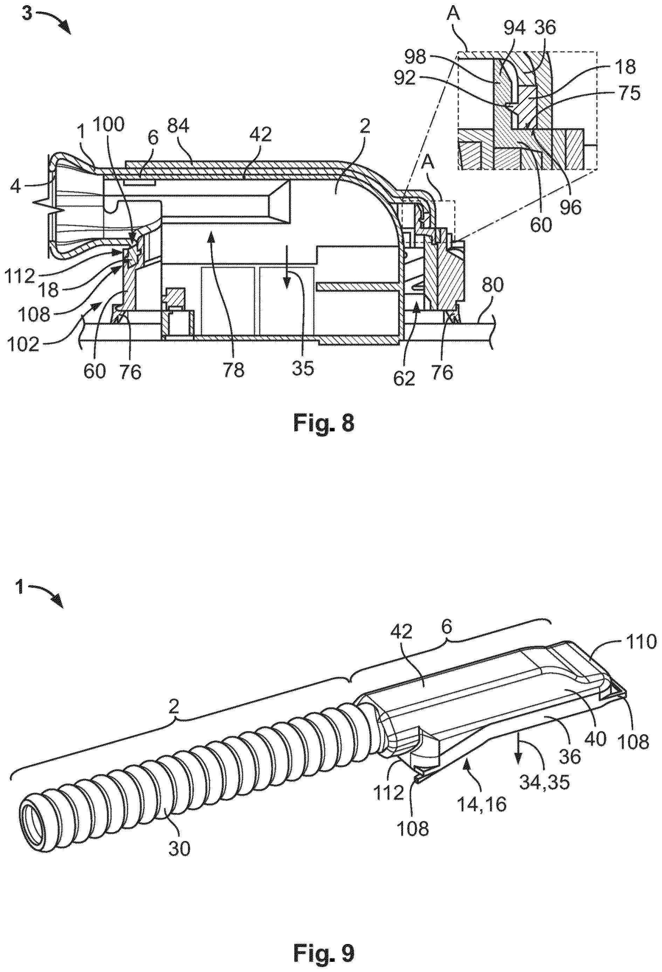

Fig. 8 shows a schematic section through connector assembly 3 with two connectors 2, 60 plugged together, where electrical cable 12 is omitted.

It can be seen in detail A of Fig. 8 that seal 18 comprises at least one sealing lip 92 which preferably runs around opening 18 and which projects in the direction of opening 18 or into the connector receptacle, i.e. inwards. Sealing lip 92 is supported in a sealing manner on mating connector 60 so that seal 18 forms a radial seal.

Furthermore, as already described above, seal 18 can abut in a sealing manner in plugging direction 35 against shoulder 75 of seal seat 74. For example, a circumferential edge surface 96 that points in plugging direction 35 and that runs around opening 18 can abut against shoulder 75.

Alternatively or cumulatively to shoulder 75, further housing sections 94 of mating connector 60 can abut against housing section 6 of grommet 1, in particular within opening 16. A collar 98 of mating connector 60 can project into housing section 6 of grommet 1 and be pressed, for example, by lever 66 or housing cover 84 against housing section 6 or cover wall 42, respectively. Sealing lip 94 is disposed preferably between edge surface 96 and collar 98. In this way, a type of labyrinth seal is created which enhances the sealing effect of sealing lip 92.

It can still be seen in Fig. 8 that housing section 6 and mating connector 60 can be connected to one another by way of latching devices 108 when plugging arrangement 3 is completed.

Reinforced region 36 can comprise latching devices 108 which are configured to latch with complementary latching devices 108 of mating connector 60. Latching devices 108 of the reinforced region are arranged, for example, at a side wall 40 of housing section 6 such as rear wall 112 and/or front wall 110.

Latching devices 108 can be disposed in particular on a rear wall 112 of housing section 6. Rear wall 112 is, for example, side wall 40 facing tube section 2.

In one configuration, front wall 110 and/or rear wall 112 can be formed exclusively by seal 18 and/or reinforced region 36. Connector receptacle 14 is then surrounded on four sides by walls 40, 110, 112. The distance between front wall 110 and rear wall 112 in longitudinal direction 28 can be longer than the distance between the two side walls which are spaced from one another transverse to longitudinal direction 28 so that connector receptacle 14 is elongated in longitudinal direction 28 of tube section 4.

Walls 40, 110, 112 are connected by cover wall 42. Seal 18 is disposed preferably at the end of walls 40, 110, 112 facing away from cover wall 42. In particular, seal 18 itself can form the edge surface 96 of opening 16 pointing away from cover wall 42 and in plugging direction 35.

Rear wall 112 can extend further away from cover wall 42 than front wall 110 so that connector receptacle 14 is deeper towards tube section 4 than in the region facing away from tube section 4. This configuration promotes pivoting motion 106 since short front wall 110 can be slipped over mating connector 60 more easily in a pivoting motion. This is particularly useful if drive system 62 is arranged on the side of front side 110 of mating connector 60 so that housing section 6 must end above drive system 62, for example, pusher 64 protruding through mating connector 60 at this point.

Regardless of the presence of a latching device 108, a side wall 40 of housing section 6 can be plugged into an in particular groove-shaped depression 100 of the mating connector. Depression 100 is disposed on side 102 of mating connector 60 facing tube section 4. Depression 100 is preferably straight and extends perpendicular to longitudinal direction 28 of the tube section and parallel to the plane spanned by opening 18 or perpendicular to plugging direction 35, respectively. Depression 100 can in particular be a groove or a pocket that extends over the entire width of side 102.

Depression 100 and/or latching devices 108 serve as starting points at which housing section 6 is attached to mating connector 60 in order to then slip it around depression 100 and/or latching devices 108 over connector 2 and mating connector 60.

In particular, seal 18 can be inserted into depression 100 before housing section 6 is slipped over connector 2 and mating connector 60.

Figs. 9 to 11 show a further embodiment of a grommet 1 and a connector assembly 3, where the differences from grommet 1 and connector assembly 3 of Figs. 1 to 8 shall be discussed hereafter. For the remainder, reference is made to the description of grommet 1 in Figs. 1 to 8.

In the case of grommet 1, for example, ribs 30 extend over the entire length of tube section 2.

Reinforced region 36 in grommet 1 of Fig. 9 is manufactured from plastic material, for example a polyester such as PBT. The remainder of grommet 1 can again be manufactured from preferably rubber-elastic material, for example, a TPE and/or a fiber-reinforced plastic material that has a Shore hardness of about 40 to about 50 Shore. Here as well, grommet 1 can be manufactured monolithically in one manufacturing step by way of a multi-component, in particular a two-component, method.

In the case of a very hard reinforced region 36, such as a reinforced region 36 made of PBT, seal 18 can be formed from the material of the non-reinforced region, i.e. a material from the remaining housing section, or from other material with a lower Shore hardness than the reinforced region is formed from. In the embodiment of Fig. 1, this is, for example, the TPE of housing section 6. Since a radial seal towards the opening 16 or connector receptacle 14, respectively, is desired for grommet 1 of Fig. 9, seal 18 is arranged in the direction transverse to plugging direction 35 between reinforced region 36 and opening 16 or connector receptacle 14, respectively. Here as well, seal 18 can form the edge surface of opening 16 or connector receptacle 14, respectively, pointing in plugging direction 35 in order to develop a sealing effect also axially.

Like in the previous embodiment, reinforced region 36 preferably forms a frame that surrounds opening 16 and that ensures the dimensional stability of seal 18. When using plastic material, for example PBT, reinforced region 36 has sufficient strength so that a housing cover 84 can be dispensed with. In such a configuration, grommet 1 can be held at mating connector 60 solely by the reinforced region.

For this purpose, latching devices 108 can be formed by reinforced region 36, like in the previous embodiment. In order to securely affix grommet 1 to the mating connector, latching devices 108 can be formed by reinforced region 36 on front wall 110 as well as on rear wall 112. A latching device 108 is preferably disposed at or near each corner of housing section 6. In the embodiment shown, reinforced region 36 on front wall 110 forms a projecting flange section 36 which can latch into latching devices 108 of mating connector 60. On the side of mating connector 60 facing away from tube section 4, on which front wall 110 is also disposed, the mating connector comprises latching devices configured as latching tabs which engage with flange section 36.

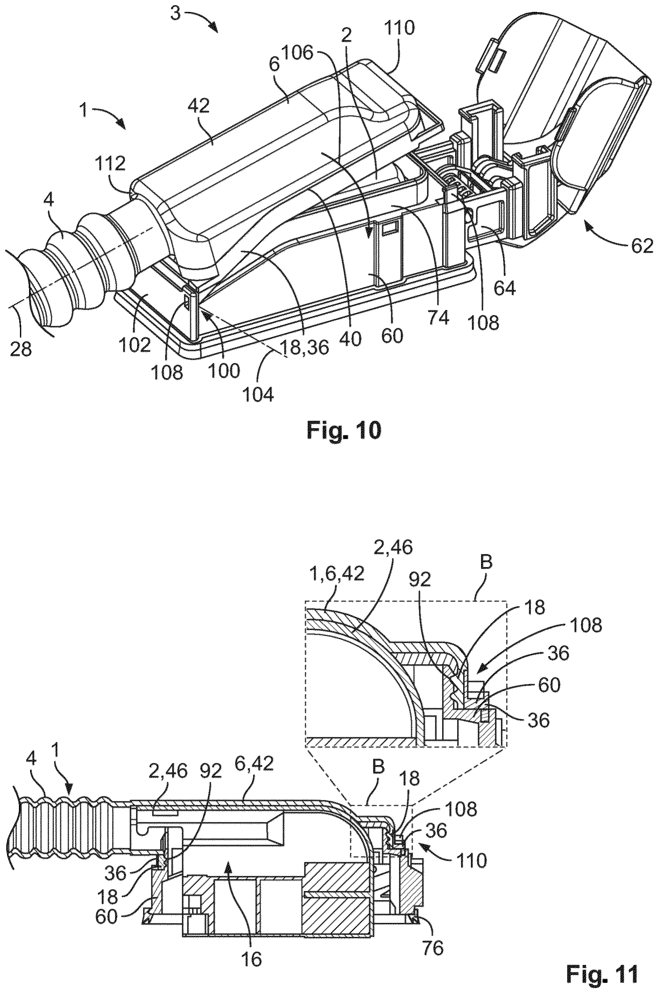

On rear wall 112, two pin-shaped latching projections are provided as latching devices which are inserted into corresponding latch openings of the mating connector in order to then slip housing section 6 over connector 2 and mating connector 60 in a pivoting motion 106. This is illustrated in Fig. 10.

It can be seen in Fig. 11 how the material of housing cover 42 continues in seal 18 and forms sealing lips 92 which project inwardly towards opening 16 and which preferably run around opening 16 in a closed and continuous manner. Seal 18 lies between reinforced region 36 and opening 16. Latching devices 108 of mating connector at face side 110.

### Reference Numerals

- 1: grommet
- 2: electrical connector
- 3: connector assembly
- 4: tube section
- 6: housing section
- 7: force-free state
- 8: arrow/elastic expandability
- 10: cable receptacle
- 12: electrical cable
- 14: connector receptacle
- 16: opening
- 18: seal
- 20: mounting position
- 22: inner diameter in the mounting position
- 24: inner diameter in the force-free state
- 26: smallest base area of the connector
- 28: longitudinal direction of the tube section
- 30: ribs
- 32: end of the tube section facing away from the housing section
- 34: opening direction
- 35: plugging direction
- 36: reinforced region of the housing section
- 38: flange section
- 40: walls of the housing section
- 42: cover wall of the housing section
- 44: contact field of the electrical connector
- 46: rear side of electrical connector
- 48: direction of the cable outlet of the electrical connector
- 52: length of the tube section in the mounting position
- 54: length of the connector in the plugging direction
- 56: end of the housing section facing away from the tube section
- 60: mating connector
- 62: drive system
- 64: pusher
- 66: lever
- 68: mating elements
- 70: fully plugged state of the connector and the mating connector
- 72: slipping the grommet over the connector and the mating connector
- 74: seal seat
- 76: wall seal of the mating connector
- 78: housing of the mating connector receiving the electrical connector
- 80: wall
- 81: open side
- 82: side of the mating connector that is open towards the connector
- 84: housing cover
- 86: latching device
- 90: arrow
- 92: sealing lip
- 94: housing sections of the mating connector
- 96: edge surface
- 98: collar of the mating connector
- 100: depression/channel/groove
- 102: side of the mating connector
- 104: pivot axis
- 106: arrow
- 108: latching devices
- 110: front wall of the housing section
- 112: rear wall of the housing section

## Claims

1. Grommet (1) for an electrical connector (2) with an elastically expandable tube section (4) and with a cap-shaped housing section (6), where said tube section comprises a cable receptacle (10) for passing through an electrical cable (12) that is connected to said electrical connector, where said housing section (6) comprises a connector receptacle (14) that is connected to said cable receptacle for receiving said electrical connector and forms a seal (18) which surrounds an opening (16) of said housing section spaced from said tube section, where said tube section is configured such that it can transition to a mounting position (20), where said tube section in said mounting position is elastically expanded as compared to a force-free state (7) and where said tube section in said mounting state has an inner diameter (22) which is at least twice the inner diameter (24) when said tube section is in said force-free state.

2. Grommet (1) according to claim 1, wherein said housing section (6) comprises a reinforced region (36) which extends at least in sections around said opening (16).

3. Grommet (1) according to claim 2, wherein said seal (18) is formed by said reinforced region (36).

4. Grommet (1) according to claim 2 or 3, wherein said seal (18) is disposed between said reinforced region (36) and said opening (16).

5. Grommet (1) according to any one of claims 1 to 4, wherein said seal (18) forms an edge surface (96) of said opening (16).

6. Grommet (1) according to any one of claims 1 to 5, wherein said housing section (6) in said mounting position (20) is pivoted and/or deformed relative to said force-free state (7) such that said tube section (4) is not overlapped in the longitudinal direction (28) of said tube section (4) by said housing section.

7. Grommet (1) according to any one of claims 1 to 6, wherein said tube section (4) in said mounting position (20) is elastically compressed to a length (52) which is shorter than said inner diameter (22) of said tube section in said mounting position.

8. Grommet (1) according to any one of claims 1 to 7, wherein said tube section (4) is provided at least in part with ribs (30) running in the circumferential direction.

9. Grommet (1) according to any one of claims 1 to 8, wherein said housing section (6) comprises at least two side walls (40, 110, 112) which are connected to one another by a cover wall (42) disposed opposite said opening (18).

10. Grommet (1) according to claim 9, wherein a side wall (112) extends further away from said cover wall (42) than said at least one other side wall.

11. Connector assembly (3), in particular for a vehicle, with a grommet (1) with a tube section (4) and a cap-shaped housing section (6), with an electrical connector (2) which on its side facing away from said contact field (44) is covered at least in sections by said housing section (6), wherein said housing section comprises a seal surrounding said electrical connector, and with an electrical cable (12) that is connected to said electrical connector and that extends through said tube section and is surrounded in a sealing manner by said tube section, wherein said tube section (4) is configured such that it can transition to a mounting position (20) in which said tube section is elastically expanded and said electrical connector can be inserted through said tube section into the housing section.

12. Connector assembly (3) according to claim 11, wherein said grommet (1) is configured according to any one of claims 1 to 10.

13. Connector assembly (3) according to claim 11 or 12, with a mating connector (60) which is configured to be pluggable together with said electrical connector (2), wherein said seal (18) of said housing section (6) abuts in a sealing manner against said mating connector when said connector and said mating connector are in a state plugged together.

14. Method for manufacturing a connector assembly (3) with an electrical connector (2), an electrical cable (12), and a grommet (1), comprising the following steps of:
- providing a pre-assembled electrical connector (2) with an electrical cable (12) connected thereto;
- inserting said electrical connector together with part of said electrical cable through a tube section (4) of an elastically expanded grommet; and
- slipping a housing section (6) of said grommet over said electrical connector.

15. Method according to claim 14, comprising the following steps of:
- plugging together said electrical connector (2) inserted through said grommet (1) with a mating connector (60) that is complementary thereto;
- slipping said housing section (6) over said mating connector (60), wherein a seal (18) of said housing section on said mating connector (60) is brought into sealing abutment against said mating connector (60).
